# FASCICULE DE BREVET EUROPEEN

(11) **EP 0 595 707 B1**
(45) Date de publication et mention de la délivrance du brevet: **04.12.1996**
(21) Numéro de dépôt: 93402621.2
(22) Date de dépôt: 26.10.1993
(51) Int. Cl.: G05B 19/04

(54) **Séquenceur linéaire avec signaux de sortie binaires**
Lineare Folgesteuerung mit binären Ausgangssignalen
Linear sequencer with binary output signals

(30) Priorité: 29.10.1992 FR 9212957
(43) Date de publication de la demande: 04.05.1994
(73) Titulaire: ALCATEL MOBILE COMMUNICATION FRANCE, 75008 Paris (FR)
(72) Inventeur: Vianney, Andrieu, F-75011 Paris (FR)
(74) Mandataire: Pothet, Jean Rémy Emile Ludovic

(56) Documents cités:
- EP-A- 0 187 985
- EP-A- 0 449 190
- DE-A- 3 417 816

## Description

La présente invention concerne un programmateur de signaux de sortie binaires.

Les programmateurs sont des appareils dont les signaux de sortie commandent le fonctionnement de divers équipements selon une séquence établie. Cette séquence est généralement enregistrée dans le programmateur lui-même et elle progresse selon un rythme défini par un signal de rythme externe.

Les solutions connues pour la réalisation de programmateurs produisant des signaux de sortie peu nombreux sont rappelées dans la demande EP 0 449 190 incorporée ici par référence. Cette demande antérieure propose également une solution bien adaptée au cas où les signaux de sortie sont plus nombreux. Dans ce cas, le programmateur produit q signaux de sortie binaires en réponse à un signal de rythme identifiant des intervalles de temps de durée T, chaque signal de sortie débutant et se terminant au cours d'intervalles de temps distincts. Il comprend une mémoire pourvue d'un emplacement de début affecté d'une adresse et d'un emplacement de fin affecté d'une adresse pour chaque signal de sortie, des moyens de lecture permettant de lire des valeurs numériques dans ces emplacements, des moyens de commande déterminant le fonctionnement de ces moyens de lecture à l'aide d'un générateur d'adresse de sorte que tous les emplacements soient lus durant chacun des intervalles de temps, des moyens de comparaison produisant un signal d'égalité lorsqu'un premier champ d'un emplacement a même valeur qu'un premier champ de l'intervalle de temps dans lequel a lieu la lecture, et des moyens de décodage produisant ou interrompant le signal de sortie qui correspond à l'emplacement pour lequel est produit le signal d'égalité selon que celui-ci est respectivement un emplacement de début ou un emplacement de fin.

Il apparaît ainsi que pendant la durée T, il faut examiner 2q situations, 2 situations pour chacun des signaux de sortie. On dispose donc d'un temps de traitement t = T/2q pour chaque situation. Ce temps de traitement t ne peut être choisi arbitrairement petit ; en effet, d'une part, il est limité par la technologie employée pour la réalisation du programmateur, d'autre part le coût de réalisation est d'autant plus élevé que la technologie est rapide, et enfin la consommation en énergie est elle aussi liée à la rapidité souhaitée.

Il faut donc faire l'hypothèse que pour une application donnée, ce temps de traitement est une donnée imposée, ce qui a pour conséquence que le nombre de signaux de sortie q et la durée d'un intervalle de temps T ne peuvent être fixés indépendamment. On peut alors définir un facteur de performance qui représente la performance du programmateur et qui vaut q/T, c'est-à-dire le nombre de signaux de sortie qui peuvent être traités pendant le temps T.

La présente invention a ainsi pour objet un programmateur de signaux de sortie binaires présentant un facteur de performance amélioré qui permet donc, pour une durée T fixée, de traiter un nombre de signaux de sortie plus important, ou alors, de traiter le même nombre de signaux de sortie pendant un temps plus court, c'est-à-dire avec une meilleure précision temporelle.

Dans le programmateur selon l'invention, les signaux de sortie binaires changent d'état au cours d'intervalles de temps indiqués par un signal de rythme, chaque signal de sortie passant à l'état actif ou inactif, c'est-à-dire respectivement débutant ou se terminant, dans des intervalles de temps distincts ; ce programmateur comprend une mémoire pourvue pour chaque signal de sortie d'un emplacement de début où figure l'intervalle de temps de début de ce signal et d'un emplacement de fin où figure l'intervalle de temps de fin de ce signal, des moyens de lecture pour lire les valeurs contenues dans ces emplacements, des moyens de commande déterminant le fonctionnement des moyens de lecture de sorte que l'éventualité d'un changement d'état soit examiné pour chaque signal de sortie durant chaque intervalle de temps, des moyens de comparaison produisant un signal d'égalité lorsqu'un premier champ de l'emplacement lu a même valeur qu'un premier champ de l'intervalle de temps dans lequel a lieu la lecture, et des moyens de décodage changeant l'état du signal de sortie qui correspond à l'emplacement pour lequel est produit le signal d'égalité, et se caractérise en ce que les moyens de commande comprennent des moyens d'indexation pour représenter l'etat du signal de sortie en cours d'examen afin de provoquer la lecture pour ce signal de sortie soit de son emplacement de début s'il est inactif soit de son emplacement de fin s'il est actif.

Ainsi le nombre de situations à examiner est divisé par deux ou, autrement dit, le facteur de performance est multiplié par deux, ce qui permet :
- soit de multiplier le nombre de signaux de sortie par deux en conservant fixe la durée des intervalles de temps,
- soit de diviser par deux la durée des intervalles de temps, en conservant fixe le nombre de signaux de sortie,
- soit de réduire sensiblement la consommation en conservant fixes la durée des intervalles de temps et le nombre de signaux de sortie, la consommation d'une mémoire en mode lecture étant proportionnelle à la fréquence des opérations de lecture.

Avantageusement, dans le programmateur, les emplacements de la mémoire sont chacun affecté d'une adresse composée d'une zone d'identification et d'un bit d'état, les zones d'identification des emplacements de début et de fin d'un signal de sortie étant affectées de la même valeur et les bits d'état des ces mêmes emplacements étant affectés respectivement des valeurs correspondant à l'état inactif et à l'état actif de ce signal de sortie, les moyens de commande comprennent un générateur d'adresse qui délivre durant chaque intervalle de temps, pour chaque signal de sortie, une adresse dont la zone d'identification correspond à ce signal et dont le bit d'état fourni par les moyens d'indexation est l'état de ce signal , les moyens de lecture lisant successivement les valeurs contenues dans les emplacements associés à chacune de ces adresses.

Il s'agit là d'un mode de mise en oeuvre particulièrement simple.

De plus, dans le programmateur,les moyens de comparaison produisent le signal d'égalité si, de plus, un deuxième champ de cet emplacement a une valeur déterminée dite valeur de périodicité.

En outre, dans le programmateur, le signal de rythme provient d'un premier compteur.

Dans un mode de réalisation privilégié du programmateur,la mémoire étant une mémoire vive, il comprend de plus des moyens d'inscription permettant d'inscrire des valeurs numériques dans cette mémoire, et les moyens de commande produisent un signal de commande propre à commander soit les moyens d'inscription soit les moyens de lecture.

Selon une caractéristique additionnelle du programmateur, les moyens de commande comprennent de plus un sélecteur d'adresse positionnant cette mémoire soit à l'adresse indiquée par le générateur d'adresse soit à une adresse d'écriture selon que le signal de commande commande respectivement soit les moyens de lecture soit les moyens d'écriture.

A cet effet, les moyens de commande reçoivent un signal d'horloge et le générateur d'adresse comprend un deuxième compteur recevant ce signal d'horloge et produisant comme zone d'identification un premier champ de la valeur indiquée par ce deuxième compteur.

Par ailleurs, on peut prévoir que dans le programmateur les moyens de commande déterminent la valeur du signal de commande en fonction de la valeur d'un deuxième champ de ce deuxième compteur.

De plus, dans le programmateur, la fréquence du signal d'horloge et la capacité du deuxième compteur sont prévues pour que ce deuxième compteur puisse effectuer un cycle complet durant chacun des intervalles de temps.

En outre, le programmateur se caractérise en ce que les moyens de décodage comprennent un registre de validation délivrant un signal de sortie seulement si une information de validation qui lui est propre est présente.

Les différents objets et caractéristiques de l'invention ressortiront avec plus de détails dans le cadre de la description d'exemples de réalisation en se référant aux figures annexées qui représentent :
- La figure 1, un schéma du programmateur de signaux de sortie binaires selon l'invention,
- la figure 2, un schéma des moyens de comparaison de ce programmateur.

Les éléments identiques éventuellement présents dans différentes figures seront affectés d'une seule référence.

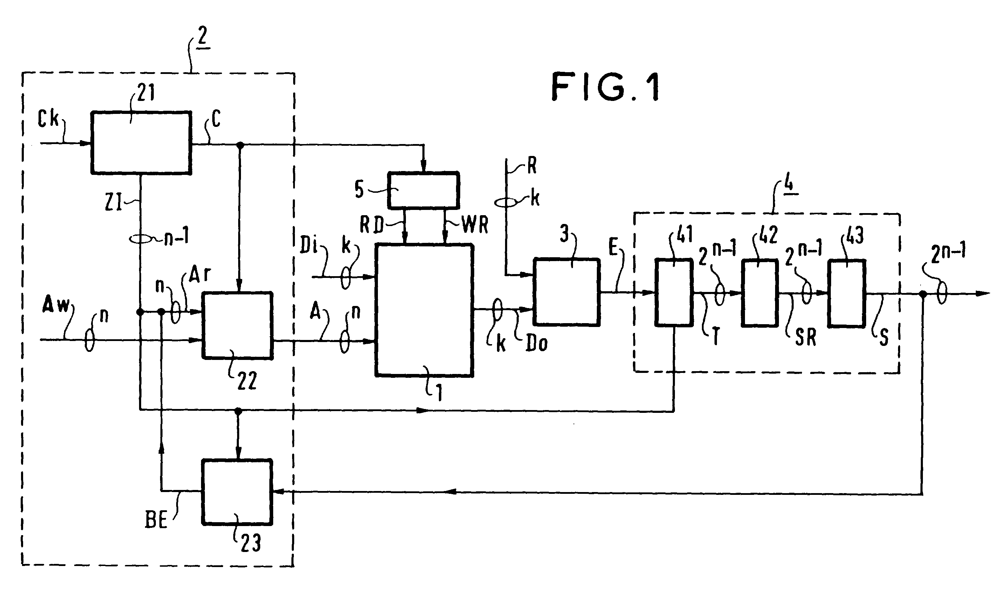

Le programmateur de l'invention, représenté dans la figure 1, est prévu pour recevoir un signal de rythme R de nature numérique qui identifie, par convention, des intervalles de temps. Il produit des signaux de sortie S à deux états.

Il comprend essentiellement une mémoire 1 où sont enregistrées les informations relatives aux différents signaux de sortie, des moyens de commande 2 de cette mémoire, des moyens de comparaison 3 permettant de détecter l'égalité entre une information de la mémoire et un intervalle de temps et des moyens de décodage 4 permettant de produire ou d'interrompre un signal de sortie S lorsque les moyens de comparaison ont identifié une information le concernant.

La mémoire 1 est de type quelconque. Ce peut être notamment une mémoire morte de type ROM ou une mémoire programmable de type PROM. Dans l'exemple de réalisation qui suit c'est une mémoire vive de type RAM. Elle est donc prévue pour recevoir un signal de lecture RD la positionnant en mode lecture et un signal d'écriture WR la positionnant en mode écriture. Ces deux signaux sont élaborés par une cellule d'analyse 5 qui reçoit un signal de commande C dont la nature sera détaillée ultérieurement.

Cette mémoire comprend des emplacements identifiés chacun par une adresse dont le nombre est fixé ici à 2ⁿ. Ceux-ci sont prévus, pour contenir des valeurs numériques composés de k bits. La mémoire est donc agencée pour recevoir un signal d'adresse A sur n fils et une donnée d'entrée Di sur k fils et pour produire une donnée de sortie Do sur k fils également.

En mode lecture, la mémoire produit comme donnée de sortie Do la valeur numérique enregistrée à l'emplacement identifié par le signal d'adresse A, tandis qu'en mode écriture, elle inscrit la donnée d'entrée Di dans cette emplacement.

Deux emplacements sont associés à chacun des signaux de sortie, le premier correspondant au début d'un tel signal et le second à sa fin. Il sera admis par la suite que tous les emplacements de la mémoire sont associés à un signal de sortie. Cette hypothèse destinée à clarifier l'exposé ne doit pas être considérée comme une restriction de l'invention qui, dans le cas contraire, reste parfaitement applicable.

Le signal de rythme R identifie successivement des intervalles de temps qui sont chacun susceptibles de déclencher le changement d'état d'un des signaux de sortie s'ils ont même valeur que le contenu d'un des deux emplacements affectés à ce signal.

Cependant, il apparait que pour un signal de sortie donné, il n'est pas nécessaire d'examiner les deux emplacements de la mémoire 1 qui lui sont associés. En effet, si ce signal est actif, il est inutile de lire l'emplacement de début correspondant, seule la fin de ce signal pouvant éventuellement intervenir. Réciproquement, si ce signal est inactif, il est inutile de lire l'emplacement de fin correspondant, seul le début de ce signal pouvant intervenir.Ainsi, pour chaque signal de sortie, il suffit de consulter son emplacement de début s'il est inactif ou son emplacement de fin s'il est actif, ceci durant chaque intervalle de temps, à l'aide de moyens d'indexation qui prennent en compte l'état de ce signal.

Dans un mode de réalisation particulier de l'invention, on associe l'emplacement de début d'un signal de sortie à une adresse paire et l'emplacement de fin de ce signal à l'adresse impaire immédiatement suivante.

Il s'ensuit que ces deux emplacements présentent une zone d'identification ZI commune constituée par les (n-1) bits de poids fort des adresses correspondantes. Le bit de poids faible de ces adresses, bit d'état BE, fourni par les moyens d'indexation, signifie s'il s'agit d'un emplacement de début ou de fin selon qu'il vaut respectivement zéro ou un. Le signal de sortie suivant est associé aux deux emplacements suivants selon le même principe et ainsi de suite.

A cet effet, les moyens de commande 2 de la mémoire 1 comprennent un générateur d'adresse qui produit un signal d'adresse de lecture Ar sur n bits. Ce générateur comprend un premier élément 21 pour produire la zone d'identification ZI de l'adresse et les moyens d'indexation qui prennent ici la forme d'un second élément 23 pour produire le bit d'état BE de cette adresse. Avantageusement le premier élément 21 du générateur prendra la forme d'un compteur incrémenté par un signal d'horloge Ck. Le second élément 23 du générateur sélectionne comme bit d'état BE, celui des signaux de sortie qui correspond à la zone d'identification produite par le premier élément 21.Ainsi, si ce signal est inactif, c'est-à-dire, s'il vaut zéro, c'est l'emplacement de début qui sera adressé, tandis que s'il est actif, c'est-à-dire s'il vaut un, c'est l'emplacement de fin qui sera adressé. Le fonctionnement de ce générateur d'adresse apparaitra plus clairement par la suite lorsque la totalité des éléments composant le programmateur aura été présentée.

Les moyens de commande 2 sont également prévus pour permettre l'inscription de valeurs numériques dans la mémoire durant chacun des intervalles de temps. A cet effet, la capacité du compteur est supérieure au nombre d'adresses.

Elle peut être fixée, par exemple égale à 2ⁿ + 2ⁿ⁻¹, ce qui implique que le compteur ait une sortie sur n + 1 bits. Le bit de poids le plus fort, c'est-à-dire celui qui identifie les valeurs supérieures ou égales à 2ⁿ est utilisé pour produire le signal de commande C qui, lorsqu'il est à un ou à zéro, définit respectivement les modes écriture ou lecture. Les moyens de commande 2 de la mémoire comprennent de plus un multiplexeur 22 qui produit le signal d'adresse A d'une valeur égale au signal d'adresse de lecture Ar ou à un signal d'adresse d'écriture Aw reçu par le programmateur selon que le signal de commande C vaut respectivement 0 ou 1.

Ainsi, lors d'un cycle complet du compteur 21, les emplacements de la moitié de la mémoire 1 sont accédés en lecture par leur adresse qui est déterminée par un premier champ de ce compteur comprenant tous les bits à l'exclusion du bit de poids fort C et du bit de poids faible BE, puis, lorsque le bit de poids fort C correspondant à un deuxième champ est à un, les données d'entrée Di sont inscrites aux emplacements identifiés par le signal d'adresse d'écriture Aw. Les premier et deuxième champs qui sont respectivement utilisés pour déterminer l'adresse de lecture et pour commander l'écriture sont ici disjoints; il va sans dire que ces champs peuvent présenter une partie commune et peuvent même être identiques. Si le signal d'horloge Ck est périodique et a une fréquence f₁ telle que le cycle du compteur se déroule exactement pendant un intervalle de temps, les deux tiers de cet intervalle de temps seront utilisés pour la lecture et le tiers restant pour l'écriture.

Les moyens de commande 2 de la mémoire 1 décrits ci-dessus sont donnés à titre d'exemple et l'invention n'exclut pas d'autres modes de réalisation. En particulier, les moyens qui permettent d'écrire durant un intervalle de temps ne sont pas strictement nécessaires au fonctionnement de l'invention, notamment si la mémoire est une mémoire morte. Il est également possible de prévoir d'autres moyens pour inscrire des valeurs numériques dans la mémoire que ce soit au cours des intervalles de temps ou dans une période où le programmateur ne remplit pas sa fonction de commande des signaux de sortie S.

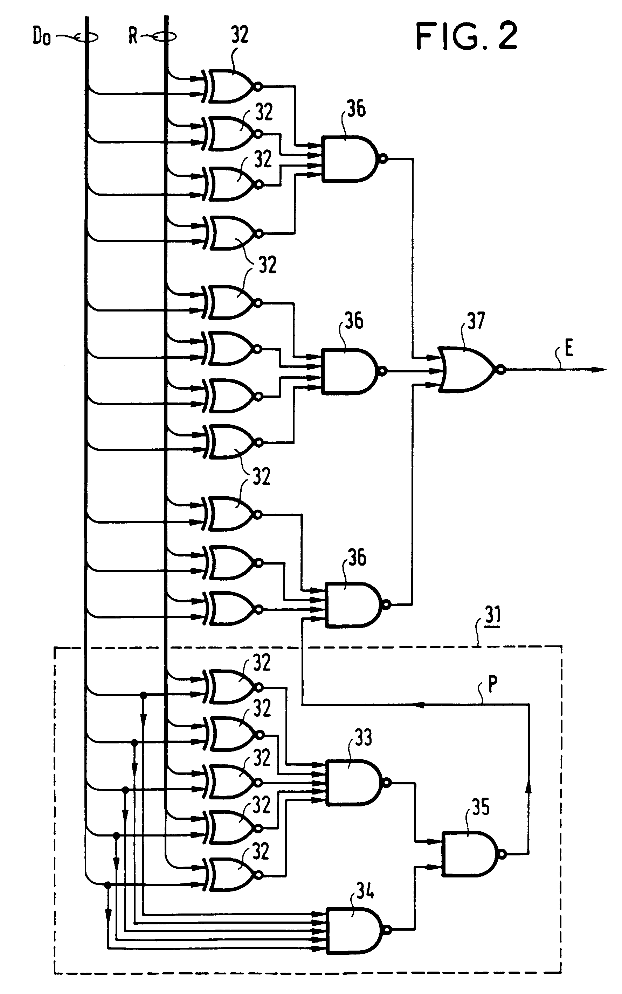

Le programmateur comprend également des moyens de comparaison 3 qui reçoivent un signal de rythme R composé de k bits et la donnée de sortie Do de la mémoire 1 composée elle aussi de k bits. Dans une première forme, ils produisent un signal d'égalité E lorsque l'intervalle de temps et la donnée de sortie sont identiques et consistent donc en un simple comparateur d'égalité. Les valeurs à comparer pouvant se subdiviser en champs, dans ce cas, les champs d'examen comprennent l'intégralité des ces valeurs. Dans une forme plus élaborée, représentée dans la figure 2, ils produisent ce signal d'égalité en cas d'identité partielle de la donnée de sortie Do et de l'intervalle de temps, c'est-à-dire pour l'identité d'un champ de ces valeurs. Dans l'exemple représenté, celles-ci comprennent 16 bits (k=16), la donnée de sortie et l'intervalle de temps comprenant chacun un premier champ formé des 11 bits de poids faible (en haut sur la figure) et un deuxième champ formé des 5 bits de poids fort (en bas sur le figure). Le signal d'égalité est produit, dans ce cas, s'il y a identité des premiers champs et s'il y a présence d'un signal de périodicité P. Ce signal est élaboré par un détecteur de périodicité 31 lorsqu'il y a identité des deuxièmes champs ou si le deuxième champ de la donnée de sortie à une valeur particulière dite valeur de périodicité. Le détecteur de périodicité comprend cinq portes "NON OU EXCLUSIF" 32 recevant chacune un bit du deuxième champ de la donnée de sortie et de l'intervalle de temps, et produisent donc un 1 en cas d'identité ; les sorties de ces cinq portes sont injectées sur les entrées d'une première porte "NON ET" 33 qui produit donc un 0 en cas d'identité des deuxièmes champs. Il comprend de plus une deuxième porte "NON ET" 34 qui produit un 0 si et seulement si les cinq bits du deuxième champ de la donnée de sortie sont à 1, c'est-à-dire si la valeur de périodicité est constituée de cinq 1. le signal de périodicité P est issu d'une troisième porte "NON ET "35 recevant les sorties des deux autres portes de ce type 33, 34.

La comparaison des premiers champs de la donnée de sortie et de l'intervalle de temps se fait de manière similaire, les bits de l'un et de l'autre étant comparés un à un au moyen de portes "NON OU EXCLUSIF" 32. Trois portes "NON ET" 36 reçoivent chacune une partie des sorties des portes précédentes, une de ces portes "NON ET" recevant de plus le signal de périodicité P. Si les premiers champs sont identiques, si, de plus le signal de périodicité P est présent, et seulement dans ce cas, les sorties de ces trois portes "NON ET" 36 sont donc à 0. Une porte "NON OU" 37 produit le signal d'égalité E à partir de ces trois sorties.

Le signal de rythme sera avantageusement issu d'un compteur bien que ce ne soit pas une nécessité selon l'invention. Dans ce cas, ce compteur incrémenté par une horloge de rythme, déclenchera la production du signal d'égalité E pour chaque emplacement mémoire dont le deuxième champ est affecté de la valeur de périodicité avec une période de répétition correspondant à 2¹¹ coups de l'horloge de rythme de fréquence f₂. Une solution avantageuse consiste à fixer f₂ égale au rapport de la fréquence f₁ du compteur 21 des moyens de commande 2 à la capacité de ce même compteur.

Les moyens de comparaison 3 décrits ci-dessus et notamment les moyens de produire un signal d'égalité de manière répétitive en utilisant la valeur de périodicité sont donnés à titre d'exemple et ne doivent pas être considérés comme une restriction de l'invention.

Les moyens de décodage 4 qui constituent le dernier organe du programmateur seront maintenant décrits en se référant à la figure 1. Ils comprennent un décodeur 41 que l'homme du métier a pour usage d'appeler décodeur n vers 2ⁿ. Dans le cas présent, le décodeur reçoit en entrée les (n-1) bits de la zone d'identification ZI. Il comprend 2ⁿ⁻¹ sorties qui correspondent à toutes les valeurs possibles de cette zone d'identification. Sur réception du signal d'égalité, il produit un signal de commutation T sur la sortie identifiée par la valeur courante de la zone d'identification ZI. Le décodeur 41 est suivi d'un premier registre 42 que l'homme du métier a pour coutume d'appeler registre de type JK. Dans le cas présent, ce premier registre 42 possède 2ⁿ⁻¹ entrées chacune raccordée à l'une des sorties du décodeur 41, et possède également 2ⁿ⁻¹ sorties associées à ses entrées. Le registre produit sur sa sortie identifiée par la valeur courante de la zone d'identification ZI, un signal d'activation SR qui change d'état chaque fois qu'il reçoit un signal de commutation T sur l'entrée correspondante.

Dans une variante de réalisation optionnelle, un deuxième registre 43 comprend 2ⁿ⁻¹ bits de validation associés chacun à un signal de sortie S et reçoit les signaux d'activation SR. Il reproduit comme signal de sortie S identifié par la valeur courante de la zone d'identification le signal d'activation SR correspondant si le bit de validation correspondant est à un.

Ce deuxième registre 43 sera avantageusement utilisé pour valider individuellement chaque signal de sortie, il sera donc dénommé registre de validation.

A titre d'exemple, lors de la mise sous tension de la mémoire 1, les valeurs numériques qu'elle contient sont indéterminées. Il est donc prudent de valider un signal de sortie uniquement lorsqu'il aura été effectivement inscrit dans cette mémoire.

Le programmateur tel qu'il a été décrit, permet à partir d'une mémoire de 2ⁿ mots de k bits de commander 2ⁿ⁻¹ signaux de sortie S selon une séquence présentant 2^{k} pas. Il permet également de commander certains de ces signaux de manière périodique au cours d'une même séquence.

Il est maintenant possible de revenir sur les moyens d'indexation 23 choisis dans l'exemple présent. Il s'agit de ce que l'homme du métier convient d'appeler encodeur 2ⁿ vers 1 ou même multiplexeur. Cet élément qui reçoit tous les signaux de sortie S produit comme bit d'état BE le signal de sortie identifié par la valeur courante de la zone d'identification ZI, orientant la mémoire 1 vers l'emplacement de début correspondant à ce signal de sortie s'il est inactif, c'est-à-dire s'il vaut zéro, et l'orientant vers l'emplacement de fin dans le cas contraire.

## Revendications

1. Programmateur de signaux de sortie (S) binaires changeant d'état au cours d'intervalles de temps indiqués par un signal de rythme (R), chaque signal de sortie (S) passant à l'état actif ou inactif, c'est-à-dire respectivement débutant ou se terminant dans des intervalles de temps distincts ; ce programmateur comprenant une mémoire (1) pourvue pour chaque signal de sortie d'un emplacement de début où figure l'intervalle de temps de début de ce signal et d'un emplacement de fin où figure l'intervalle de temps de fin de ce signal, des moyens de lecture pour lire les valeurs contenues dans ces emplacements, des moyens de commande (2, 5) déterminant le fonctionnement des moyens de lecture de sorte que l'éventualité d'un changement d'état soit examiné pour chaque signal de sortie (S) durant chaque intervalle de temps, des moyens de comparaison (3) produisant un signal d'égalité (E) lorsqu'un premier champ de l'emplacement lu a même valeur qu'un premier champ de l'intervalle de temps dans lequel a lieu la lecture, et des moyens de décodage (4) changeant l'état du signal de sortie (S) qui correspond à l'emplacement pour lequel est produit le signal d'égalité (E), caractérisé en ce que lesdits moyens de commande (2, 5) comprennent des moyens d'indexation (23) pour représenter l'état du signal de sortie (S) en cours d'examen afin de provoquer la lecture pour ledit signal de sortie (S) soit de son emplacement de début s'il est inactif soit de son emplacement de fin s'il est actif.

2. Programmateur selon la revendication 1, caractérisé en ce que les emplacements de la mémoire ont chacun une adresse composée d'une zone d'identification (ZI) et d'un bit d'état (BE), les zones d'identification des adresses des emplacements de début et de fin d'un signal de sortie (S) ayant la même valeur et les bits d'état de ces adresses ayant respectivement des valeurs correspondant à l'état inactif et à l'état actif dudit signal de sortie (S), et en ce que lesdits moyens de commande (2, 5) comprennent un générateur d'adresse (21, 23) qui délivre durant chaque intervalle de temps, pour chaque signal de sortie, une adresse composée d'une zone d'identification (ZI) correspondant à ce signal et d'un bit d'état (BE) fourni par lesdits moyens d'indexation (23) représentant l'état de ce signal, lesdits moyens de lecture lisant successivement les valeurs contenues dans les emplacements associées à chacune de ces adresses.

3. Programmateur de signaux de sortie binaires selon la revendication 2 caractérisé en ce que lesdits moyens de comparaison (3) produisent ledit signal d'égalité (E) si, de plus, un deuxième champ dudit emplacement a une valeur déterminée dite valeur de périodicité.

4. Programmateur de signaux de sortie binaires selon l'une quelconque des revendications 2 à 3, caractérisé en ce que ledit signal de rythme (R) provient d'un premier compteur.

5. Programmateur de signaux de sortie binaires selon l'une quelconque des revendications 2 à 4, caractérisé en ce que ladite mémoire (1) étant une mémoire vive, il comprend de plus des moyens d'inscription permettant d'inscrire des valeurs numériques dans cette mémoire, et en ce que lesdits moyens de commande (2) produisent un signal de commande (C) propre à commander soit lesdits moyens d'inscription soit lesdits moyens de lecture.

6. Programmateur de signaux de sortie binaires selon la revendication 5, caractérisé en ce que lesdits moyens de commande (2) comprennent de plus un sélecteur d'adresse (22) positionnant ladite mémoire soit à l'adresse de lecture (Ar) indiquée par ledit générateur d'adresse soit à une adresse d'écriture (Aw) selon que ledit signal de commande (C) commande respectivement soit lesdits moyens de lecture soit lesdits moyens d'écriture.

7. Programmateur de signaux de sortie binaires selon la revendication 6, caractérisé en ce que lesdits moyens de commande (2) recevant un signal d'horloge (Ck), ledit générateur d'adresses comprend un deuxième compteur (21) recevant ce signal d'horloge et produisant comme zone d'identification (ZI) un premier champ de la valeur indiquée par ce deuxième compteur.

8. Programmateur de signaux de sortie binaires selon la revendication 7, caractérisé en ce que lesdits moyens de commande (2) déterminent la valeur dudit signal de commande (C) en fonction de la valeur d'un deuxième champ dudit deuxième compteur.

9. Programmateur de signaux de sortie binaires selon la revendication 8, caractérisé en ce que la fréquence dudit signal d'horloge (Ck) et la capacité dudit deuxième compteur (21) sont prévues pour que ce deuxième compteur puisse effectuer un cycle complet durant chacun desdits intervalles de temps.

10. Programmateur de signaux de sortie binaires selon l'une quelconque des revendications précédentes caractérisé en ce que lesdits moyens de décodage (4) comprennent un registre de validation (43) délivrant un dit signal de sortie seulement si une information de validation qui lui est propre est présente.

## Claims

1. Programmer of binary output signals (S) changing state during time intervals indicated by a timing signal (R), each output signal (S) going to the active or inactive state, i.e. respectively starting and ending during separate time intervals; said programmer comprises a memory (1) having a start location holding the start time interval of said signal and an end location holding the end time interval of said signal, read means for reading the values in said locations, control means (2, 5) determining the operation of the read means so that the possibility of a change of state is examined for each output signal (S) during each time interval, comparator means (3) producing an identity signal (E) if a first field of the location read has the same value as a first field of the time interval in which the reading takes place, and decoder means (4) changing the state of the output signal (S) corresponding to the location for which the identity signal (E) is produced, characterised in that said control means (2, 5) comprise indexing means (23) for representing the state of the output signal (S) being examined in order to bring about reading of the start location of said output signal (S) if it is inactive or of its end location if it is active.

2. Programmer according to claim 1 characterised in that the locations of the memory each have an address comprising an identification area (ZI) and a status bit (BE), the identification areas of the addresses of the start and end locations of an output signal (S) having the same value and the status bits of said addresses having respective values corresponding to the inactive state and the active state of said output signal (S), and in that said control means (2, 5) comprise an address generator (21, 23) which delivers during each time interval for each output signal an address including an identification area (ZI) corresponding to said signal and a status bit (BE) supplied by said indexing means (23) representing the status of said signal, said read means reading successively the values contained in the locations associated with each of said addresses.

3. Programmer of binary output signals according to claim 2 characterised in that said comparator means (3) produce said identity signal (E) if a second field of said location has a particular periodicity value.

4. Programmer of binary output signals according to claim 2 or claim 3 characterised in that said timing signal (R) is produced by a first counter.

5. Programmer of binary output signals according to any one of claims 2 to 4 characterised in that said memory (1) being a random access memory, it further comprises write means for writing numerical values into said memory and in that said control means (2) produce a control signal (C) adapted to control either said write means or said read means.

6. Programmer of binary output signals according to claim 5 characterised in that said control means (2) further comprise an address selector (22) setting said memory either to the read address (Ar) indicated by said address generator or to a write address (Aw) depending on whether said control signal (C) is respectively controlling said read means or said write means.

7. Programmer of binary output signals according to claim 6 characterised in that said control means (2) receive a clock signal (Ck), said address generator comprises a second counter (21) receiving said clock signal and producing by way of identification area (ZI) a first field having the value indicated by said second counter.

8. Programmer of binary output signals according to claim 7 characterised in that said control means (2) determine the value of said control signal (C) according to the value of a second field of said second counter.

9. Programmer of binary output signals according to claim 8 characterised in that the frequency of said clock signal (Ck) and the capacity of said second counter (21) are such that said second counter can execute a complete cycle during each of said time intervals.

10. Programmer of binary output signals according to any one of the preceding claims characterised in that said decoder means (4) comprise an enabling register (43) delivering an output signal only if an enabling information specific to it is present.

## Patentansprüche

1. Folgeschaltung zur Erzeugung von binären Ausgangssignalen (S), die ihren Zustand während durch ein Uhrsignal (R) angegebenen Zeitintervallen wechseln, wobei jedes Ausgangssignal in unterschiedlichen Zeitintervallen in den aktiven oder inaktiven Zustand übergeht, d.h. beginnt oder endet, und wobei diese Folgeschaltung einen Speicher (1) mit für jedes Ausgangssignal einer Speicherzelle, in der der Anfang, d.h. das Anfangszeitintervall dieses Signals enthalten ist, und einer Speicherzelle, in der das Ende, d.h. das Endzeitintervall für dieses Signal enthalten ist, weiter Steuermittel (2, 5), die den Betrieb der Speicherlesemittel so überwachen, daß die Eventualität eines Zustandswechsels für jedes Ausgangssignal (S) während jedes Zeitintervalls überprüft wird, Vergleichsmittel (3), die ein Gleichheitssignal (E) erzeugen, wenn ein erstes Feld der gelesenen Speicherzelle den gleichen Wert wie ein erstes Feld der Nummer des Zeitintervalls hat, in dem das Auslesen erfolgt, sowie Dekodiermittel (4) enthält, die den Zustand des Ausgangssignals (S) ändern, das der Speicherzelle entspricht, für die das Gleichheitssignal (E) erzeugt wurde, dadurch gekennzeichnet, daß die Steuermittel (2, 5) Indexiermittel (23) zur Darstellung des Zustands des Ausgangssignals (S) während der Überprüfung aufweisen, um das Auslesen entweder an der Anfangsstelle, wenn das Ausgangssignal (S) inaktiv war, oder an der Endstelle hervorzurufen, wenn dieses Signal aktiv war.

2. Folgeschaltung nach Anspruch 1, dadurch gekennzeichnet, daß die Speicherzellen je eine aus einer Identifizierungszone (ZI) und einem Zustandsbit (BE) zusammengesetzte Adresse besitzen, wobei die Identifizierungszonen der Speicherzellenadressen für den Anfang und das Ende eines Ausgangssignals (S) den gleichen Wert besitzen und die Zustandsbits dieser Adressen Werte entsprechend dem inaktiven bzw. aktiven Zustand des Ausgangssignals (S) haben, und daß die Steuermittel (2, 5) einen Adressengenerator (21, 23) enthalten, der während jedes Zeitintervalls für jedes Ausgangssignal eine Adresse liefert, die aus einer Identifizierungszone (ZI) entsprechend diesem Signal und einem Zustandsbit (BE) besteht, das von den Indexierungsmitteln (23) geliefert wird und den Zustand dieses Signals angibt, wobei die Lesemittel nacheinander die Werte lesen, die in den jeder dieser Adressen zugeordneten Speicherzellen enthalten sind.

3. Folgeschaltung zur Erzeugung von binären Ausgangssignalen nach Anspruch 2, dadurch gekennzeichnet, daß die Vergleichsmittel (3) das Gleichheitssignal (E) erzeugen, wenn außerdem ein zweites Feld der Speicherzelle einen vorbestimmten Wert, Periodizitätswert genannt, besitzt.

4. Folgeschaltung zur Erzeugung von binären Ausgangssignalen nach einem beliebigen der Ansprüche 2 und 3, dadurch gekennzeichnet, daß das Uhrsignal (R) von einem ersten Zähler kommt.

5. Folgeschaltung zur Erzeugung von binären Ausgangssignalen nach einem beliebigen der Ansprüche 2 bis 4, dadurch gekennzeichnet, daß der Speicher (2) ein Arbeitsspeicher ist und die Folgeschaltung weiter Einschreibemittel enthält, mit denen digitale Werte in den Speicher eingetragen werden können, und daß die Steuermittel (2) ein Steuersignal (C) erzeugen, das entweder die Mittel zum Einschreiben oder zum Auslesen aktiviert.

6. Folgeschaltung zur Erzeugung von binären Ausgangssignalen nach Anspruch 5, dadurch gekennzeichnet, daß die Steuermittel (2) außerdem einen Adressenwähler (22) besitzen, der den Speicher entweder auf die Leseadresse (Ar), die vom Adressengenerator angegeben wird, oder auf eine Schreibadresse (Aw) einstellt, je nachdem, ob das Steuersignal (C) die Lesemittel oder die Schreibmittel ansteuert.

7. Folgeschaltung zur Erzeugung von binären Ausgangssignalen nach Anspruch 6, dadurch gekennzeichnet, daß die Steuermittel (2) ein Taktsignal (Ck) empfangen und der Adressengenerator einen zweiten Zähler (21) enthält, der das Taktsignal empfängt und als Identifizierungszone (ZI) ein erstes Feld mit dem Wert des zweiten Zählers erzeugt.

8. Folgeschaltung zur Erzeugung von binären Ausgangssignalen nach Anspruch 7, dadurch gekennzeichnet, daß die Steuermittel (2) den Wert des Steuersignals (C) abhängig vom Wert eines zweiten Feldes im zweiten Zähler bestimmen.

9. Folgeschaltung zur Erzeugung von binären Ausgangssignalen nach Anspruch 8, dadurch gekennzeichnet, daß die Frequenz des Taktsignals (Ck) und die Kapazität des zweiten Zählers (21) so gewählt sind, daß dieser zweite Zähler einen vollständigen Zählzyklus während jedes Zeitintervalls durchführen kann.

10. Folgeschaltung zur Erzeugung von binären Ausgangssignalen nach einem beliebigen der vorhergehenden Ansprüche, dadurch gekennzeichnet, daß die Dekodiermittel (4) ein Freigaberegister (43) enthalten, das ein Ausgangssignal nur liefert, wenn eine Freigabeinformation vorliegt.
